# EUROPÄISCHE PATENTSCHRIFT

(11) **EP 1 557 311 B1**
(45) Veröffentlichungstag und Bekanntmachung des Hinweises auf die Patenterteilung: **21.01.2009**
(21) Anmeldenummer: 04028525.6
(22) Anmeldetag: 02.12.2004
(51) Int. Cl.: B60K 11/04

(54) **Kühleranordnung mit einer Befestigungseinrichtung für einen Wärmetauscher**
Radiator arrangement with a fixing means for a heat exchanger
Agencement d'un radiateur avec un dispositif de fixation d'un échangeur de chaleur

(30) Priorität: 22.01.2004 DE 102004003197
(43) Veröffentlichungstag der Anmeldung: 27.07.2005
(73) Patentinhaber: Bayerische Motoren Werke Aktiengesellschaft, 80809 München (DE)
(72) Erfinder: Reiprich, Helmut, 85540 Haar (DE)

(56) Entgegenhaltungen:
- DE-A1- 10 008 638
- US-B1- 6 386 497
- PATENT ABSTRACTS OF JAPAN Bd. 1995, Nr. 10, 30. November 1995 (1995-11-30) -& JP 07 186738 A (NIPPONDENSO CO LTD), 25. Juli 1995 (1995-07-25)

## Beschreibung

Die Erfindung betrifft eine Kühleranordnung mit einer Einrichtung zur Befestigung eines Wärmetauschers einer Kühleinrichtung an einem Kraftfahrzeug umfassend Aufnahmen mit Führungen sowie mit diesen korrespondierende Zapfen, wobei zwei gegenüberliegenden Seiten des Wärmetauschers Zapfen und Führungen zugeordnet sind.

Eine derartige Halterung für einen Kühler eines Kraftfahrzeugs ist beispielsweise in der DE 39 33 410 C1 beschrieben und weist je zwei an gegenüberliegenden Kühlerschmalseiten mit Abstand voneinander angeordnete Zapfen auf, die in entsprechenden Lagerbohrungen von fahrzeugfesten Trägern gehalten sind. Die Lagerbohrungen sind mit je einem Aufnahmeschlitz für den Zapfen versehen, wobei die unteren Aufnahmeschlitze senkrecht gerichtet nach oben offen und die oberen Aufnahmeschlitze waagerecht nach vorne offen ausgebildet sind. Auf diese Weise soll der Kühler in einfacher Weise ein- und ausbaubar sein und dennoch in seiner Einbauposition sicher gehalten,werden. Zum Einbau des Kühlers in das Fahrzeug wird der Kühler in leicht gekippter Lage von oben mit seinem unteren Zapfen über den nach oben offenen unteren Aufnahmeschlitz eingesetzt und anschließend um die durch die unteren Zapfen gebildete waagerechte Achse gekippt, so dass die oberen Zapfen von den nach vorne geöffneten oberen Aufnahmeschlitzen aufgenommen werden. In Einbaulage ist der Kühler mit seinen Zapfen in den Lagerbohrungen fest gehalten. Insbesondere ist ein Ausweichen des Kühlers bei einer Krafteinwirkung von unten und/oder von oben nicht möglich, so dass im Falle einer Kollision der Kühler beschädigt oder sogar zerstört wird.

Eine Befestigungseinrichtung für einen Kühler, welche eine Beschädigung des Kühlers bei einer Kollision vermeiden soll, ist mit der US 5,220,073 A beschrieben. Gemäß der US 5,220,073 A ist der Kühler an seinen gegenüberliegenden Kühlerschmalseiten mit Konsolen verbunden und mit diesen um eine oberes Zapfenpaar verschwenkbar. Über die Konsolen ist der Kühler mittels Zugfedern in Betriebslage gehalten. Im Falle einer leichten Kollision kann der Kühler gegen die Kraft der Zugfedern ausschwenken und so bedingt ausweichen. Die Ausweichmöglichkeit ist allerdings bedingt durch die Festlegung des oberen Zapfenpaars begrenzt, der Kühler wird insbesondere bei einer größeren Krafteinwirkung nicht freigegeben, eine Beschädigung des Kühlers bis hin zur Zerstörung ist die Folge. Zudem ist der Kühler in seiner Betriebslage nur mittels der Kraft der Zugfedern gehalten, so dass eine ausreichende Fixierung nicht gegeben ist.

Aus der DE 100 08 638 A1 ist eine Kühlerbefestigungsstruktur bekannt, bei der der Kühler sowohl mittels einer oberen Haltestruktur an seinem oberen Ende als auch mittels einer unteren Haltestruktur an seinem unteren Bereich befestigt ist. Wenn der Kühler aufgrund einer entsprechend gerichteten Krafteinwirkung nach hinten bewegt wird, kann die obere Haltestruktur den Kühler freigeben. Die untere Haltestruktur ermöglicht dabei ein Kippen des Kühlers um untere Haltestifte. Allerdings wird der Kühler von der unteren Haltestruktur nicht frei gegeben, was insbesondere bei einer nach oben und in Richtung des Kraftfahrzeughecks gerichteten Krafteinwirkung zu einer Beschädigung oder Zerstörung des Kühlers führen kann.

Der US 6386497 B1 zufolge, aus der eine ähnliche Anordnung hervorgeht, ist alternativ ein Freigeben des Kühlers sowohl durch die obere als auch durch die untere Haltestruktur ermöglicht. Allerdings sind die Kühler-Befestigungen so aufgebaut, dass ein Ausweichen des Kühlers bei Krafteinwirkung nur in horizontaler Richtung ermöglicht ist. Eine Krafteinwirkung mit vertikaler Komponente kann auch hier zu einer Beschädigung oder Zerstörung des Kühlers führen.

Der Erfindung liegt daher die Aufgabe zugrunde, eine eingangs genannte Einrichtung zur Befestigung eines Wärmetauschers bereitzustellen, welche einerseits eine sichere Fixierung des Kühlers in seiner Betriebslage ermöglicht und andererseits im Falle einer Krafteinwirkung, welche zu einer Beschädigung des Kühlers führen könnte, ein ausreichendes Ausweichen ermöglicht. Dabei sollen die Nachteile des Standes der Technik vermieden und/oder dieser weiter verbessert werden.

Die Lösung der Aufgabe erfolgt mit den Merkmalen des Anspruchs 1, wobei gemäß der zugrundeliegenden Idee die Führungen nach oben und in Richtung des Kraftfahrzeughecks gerichtet sind, um den Wärmetauscher bei einer nach oben und in Richtung des Kraftfahrzeughecks gerichteten, einen vorgegebenen Wert übersteigenden Krafteinwirkung frei zu geben. Die zur Freigabe des Kühlers erforderliche Kraft ist dabei so eingestellt, dass der Kühler bei einer Krafteinwirkung zerstörungsfrei ausweicht und insbesondere der Kühlmittelkreislauf geschlossen bleibt.

Besonders bevorzugte Ausgestaltungen und Weiterbildungen der Erfindung sind Gegenstand der Unteransprüche.

Sehr vorteilhaft ist diese Freigaberichtung, da sie bei einem fahrzeugfrontseitig angeordneten Kühler der wahrscheinlichsten Kollisionsrichtung entspricht.

Gemäß einer besonders bevorzugten Ausgestaltung der Erfindung sind die Zapfen dem Wärmetauscher und die Aufnahmen dem Fahrzeug zugeordnet. Selbstverständlich ist auch eine Ausführung mit dem Fahrzeug zugeordneten Zapfen und dem Wärmetauscher zugeordneten Aufnahmen möglich, wobei die Führungen dann nach unten und/oder vorne geöffnet sind.

Zweckmäßigerweise sind jeder der zwei gegenüberliegenden Seiten des Wärmetauschers wenigstens zwei zumindest annähernd parallele Führungen und damit korrespondierende Zapfen zugeordnet, so dass der Kühler kippsicher befestigt ist. Zur Fixierung und (Schwingungs-)Dämpfung des Wärmetauschers zwischen Führung und Zapfen sind gummielastische Lager vorgesehen und die Führung weist in Freigaberichtung eine Verengung auf. Die Verengung ist mittels eines Umgriffs des Zapfens größer 180°, vorliegend ca. 220° bis 300°, gebildet. Bei dieser Ausgestaltung ist die zur Freigabe des Kühlers erforderliche Kraft insbesondere durch die Verengung der Führung sowie die Elastizität und Reibung der gummielastischen Lager bestimmt.

Als sehr vorteilhaft wird es angesehen, wenn die gummielastischen Lager durch auf die Zapfen aufgeschobene, flachringartige Gummielemente gebildet sind. Die Gummielemente können jedoch beispielsweise auch als Gummistopfen mit einem den Zapfen bildenden harten Kern, wie aus Metall, ausgebildet und mit dem Wärmetauscher oder fahrzeugseitig verschraubt, verlötet, verschweißt, verklebt oder sein.

Gemäß einem bevorzugten Ausführungsbeispiel, der Erfindung sind die Aufnahmen zur fahrzeugseitigen Festlegung mittels Haltelaschen befestigt.

Sehr von Vorteil ist es, wenn die Befestigungseinrichtung geeignet ist, den Wärmetauscher bei einer einen ersten vorgegebenen Wert übersteigenden Krafteinwirkung frei zu geben, indem die Zapfen mit den Gummielementen unter Überwindung der Haltekraft in Freigaberichtung aus den Aufnahmen ausknüpfen. Bei einer einen zweiten vorgegebenen Wert, welcher größer als der erste vorgegebene Wert ist, übersteigenden und/oder einer nicht in Freigaberichtung gerichteten Krafteinwirkung erfolgt zweckmäßigerweise eine Freigabe, indem die Haltelaschen abbrechen.

Bei einer besonders bevorzugten Ausgestaltung der Erfindung ist in Verbindung mit der Befestigungseinrichtung, insbesondere abströmseitig, eine Luftführungseinrichtung vorgesehen, mittels welcher der Luftstrom nach unten ablenkbar ist. Zweckmäßigerweise ist die Luftführungseinrichtung zumindest bereichsweise elastisch ausgebildet, so dass sie bei einer Verschiebung des Wärmetauschers zumindest bereichsweise reversibel ausweicht.

Nachfolgend ist ein besonders zu bevorzugendes Ausführungsbeispiel der Erfindung unter Bezugnahme auf Figuren näherer erläutert, dabei zeigen schematisch und beispielhaft
- Figur 1: einen Ölkühler,
- Figur 2: eine Befestigungseinrichtung für einen Ölkühler bei Freigabe bedingt durch eine einen ersten vorgegebenen Wert übersteigenden Krafteinwirkung sowie
- Figur 3: eine Befestigungseinrichtung für einen Ölkühler bei Freigabe bedingt durch eine einen zweiten vorgegebenen Wert übersteigenden Krafteinwirkung.

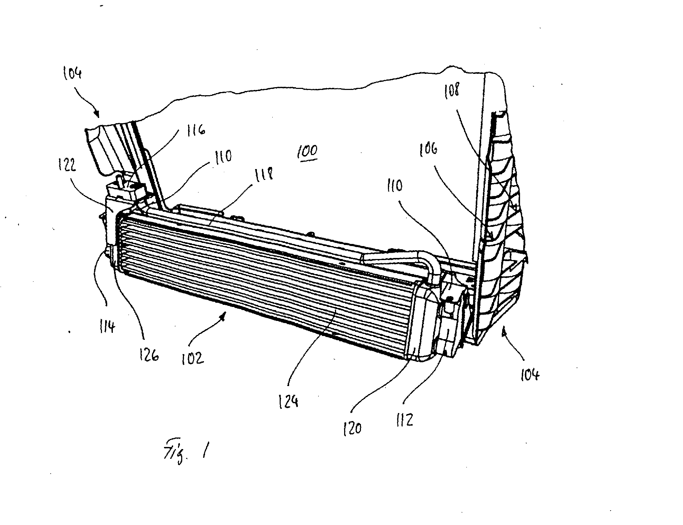

Figur 1 zeigt eine Kühleranordnung 100 mit einem sich im wesentlichen quer erstreckenden Ölkühler 102. Die gesamte Anordnung befindet sich im hier nicht näher gezeigten Fahrzeug wie üblich frontseitig vor der Brennkraftmaschine und hinter karosserieseitig vorgesehenen Lufteinlässen. Die Kühleranordnung 100 umfasst seitlich zur Verbindung mit dem Fahrzeug eine rahmenartige Halteeinrichtung 104, wobei der in Fahrtrichtung vordere Bereich 106 vorliegend einen Wärmetauscher einer Klimaanlage und der hintere Bereich 108 einen Kühler für das die Brennkraftmaschine kühlende Kühlwasser aufnimmt. Im unteren Bereich der Anordnung 100 ist vor dem Wärmetauscher der Klimaanlage eine Traverse 110 vorgesehen, welche endseitig eine mit den folgenden Figuren näher gezeigte Einrichtung 112, 114 zur Befestigung des Ölkühlers 112 aufnimmt.

Der luftströmungsgünstig leicht nach hinten fliehend, vorliegend unter einem Winkel von 25° zur Senkrechten, eingebaute Ölkühler 112 weist eine mittels eines den Ölkühler 112 klammerartig umgreifenden Befestigungsstücks 122 verbundene, flanschartig ausgebildete Anordnung 116 zum dichten Anschluss hier nicht näher dargestellter flexibler Zu- und Ableitungen auf. Ausgehend vom Anschlussstück 116 verläuft die Vorlaufleitung 118 oberhalb des Ölkühlers quer zum seitlichen Verteilkasten 120 des Ölkühlers 112, von welchem aus die den Kühlrippen 124 zugeordneten Verteilkanäle quer durchströmt werden. Das gekühlte Öl sammelt sich im Sammelkasten 126 und wird von hier aus wieder dem Ölkreislauf zugeführt.

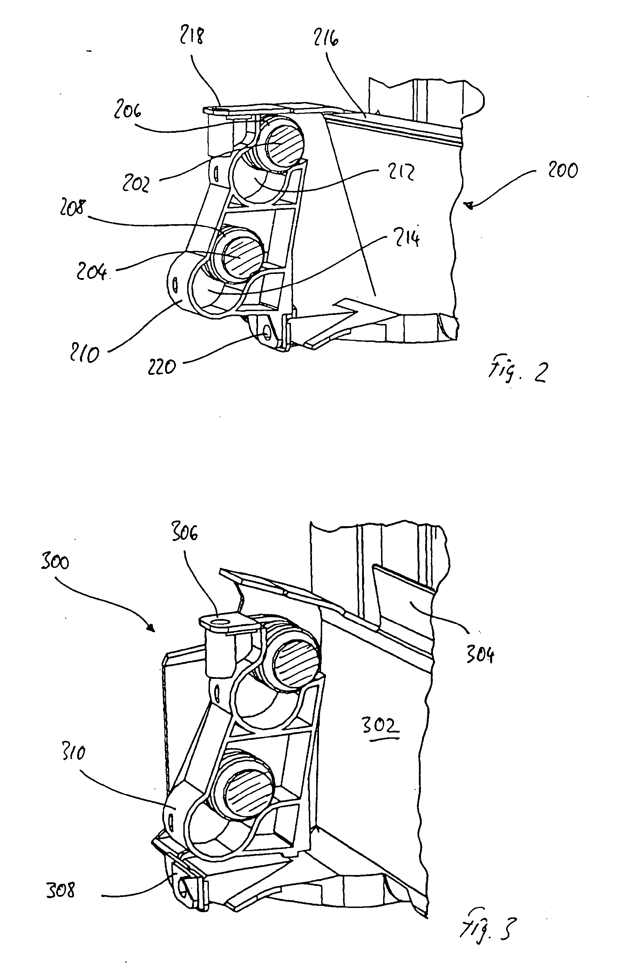

Die in Figur 1 mit 112, 114 bezeichnete freigabefähige Befestigungseinrichtung für den Ölkühler ist in Figur 2 näher gezeigt und hier mit 200 beziffert. Der Ölkühler weist an seinen gegenüberliegenden schmalen Stirnseiten jeweils zwei Zapfen auf, wobei in der Figur die zwei Zapfen 202, 204 einer Stirnseite geschnitten dargestellt sind. Die Zapfen 202, 204 bilden mit dem Ölkühler, insbesondere mit dem den Verteilkasten bildenden Bereich eine Einheit, sie können integraler Bestandteil des Ölkühlers oder mit diesem verbunden sein. Auf jeden Zapfen 202, 204 ist ein flachringartiges Gummielement 206, 208 aufgeschoben, welches zumindest außenseitig eine Profilierung aufweist. Fahrzeugseitig sind beispielsweise mittels Schrauben über Haltelaschen 218, 220 mit dem Fahrzeug bzw. mit der Halteeinrichtung (Fig. 1: 104) verbundene Aufnahmen 210 vorgesehen, welche mit den Zapfen 202, 204 korrespondierende Führungen 212, 214 aufweisen. Die Führungen 212, 214 sind einseitig in Fahrzeugrichtung nach oben/hinten geöffnet, wobei ihr Grund, in welchem der Ölkühler regelmäßig gehalten ist, den Zapfen 202, 204 mit Gummielement 206, 208 in einem Bereich größer 180°, vorliegend ca. 220° bis 300°, umgreift, so dass der Ölkühler vorgespannt gehalten ist. In Öffnungsrichtung kann bei einer entsprechend gerichteten, ausreichend großen Krafteinwirkung wie dargestellt eine Freigabe des Ölkühlers erfolgen, indem die Zapfen 202, 204 mit Gummielement 206, 208 ausknüpfen. Maßgeblich für die erforderliche Freigabekraft sind insbesondere der Umschlingungswinkel der Führungen 212, 214, die Reibung zwischen Gummielement 206, 208 und Führungen 212, 214 und die Größe der Kontaktfläche zwischen Gummielement 206, 208 und Kulisse 212, 214. Die erforderliche Freigabekraft wird so eingestellt, dass im Falle eines mechanischen Fremdeinwirkens, beispielsweise aufgrund einer Kollision durch Unfall oder Unterschreiten der Bodenfreiheit, ein zumindest annähernd beschädigungsfreies, insbesondere zerstörungsfreies, Ausknüpfen des Ölkühlers ermöglicht wird. Die Aufnahme 210 ist leicht und materialsparend beispielsweise als Kunststoffspritzgießteil mit Versteifungsrippen oder in (Leicht-)Metall ausgeführt.

Figur 2 zeigt ferner eine ausweichfähige Luftführungseinrichtung 216. Die Luftführungseinrichtung 216 ist vorliegend in Fahrtrichtung hinter dem Ölkühler angeordnet und dient zur Ableitung der an den Kühlrippen (Fig. 1: 124) vorbeigeführten Kühlluft nach unten. Die Luftführungseinrichtung 216 ist zumindest bereichsweise durch eine Wandstärkenausdünnung elastisch ausgebildet und kann so im Falle eines mechanischen Fremdeinwirkens zumindest annähernd beschädigungsfrei ausweichen; Figur 3 stellt insbesondere dar, wie die Abluftführungsklappe 304 nach oben wegklappt.

Eine Befestigungseinrichtung 300 für einen Ölkühler bei dessen Freigabe bedingt durch eine einen zweiten vorgegebenen Wert übersteigenden Krafteinwirkung ist mit Figur 3 gezeigt. Bei einer übermäßigen Krafteinwirkung, beispielsweise im Crash-Fall, brechen die Haltelaschen 306, 308 ab, der Ölkühler und die Halteeinrichtungen 310 werden verschoben, die Abluftführung 302 dreht um einen elastisch verformbaren Bereich weg. Auch in diesem Fall wird der Ölkühler selbst jedoch nicht beschädigt, so dass seine Funktion aufrecht erhalten bleibt und ein nur geringer Reparaturaufwand entsteht. Ein Ölaustritt und eine damit verbundene Umweltverschmutzung können wirksam vermieden werden.

Auch wenn vorliegend die Erfindung anhand eines Ölkühlers beschrieben ist, kann die erfindungsgemäße Befestigungseinrichtung selbstverständlich auch bei anderen Wärmetauschern beispielsweise einer Klimaanlage, einer Brennkraftmaschinenkühlung oder einer Kühleinrichtung für elektrische Einrichtungen zum Einsatz kommen.

## Patentansprüche

1. Kühleranordnung mit einer
Einrichtung zur Befestigung eines Wärmetauschers einer Kühleinrichtung an einem Kraftfahrzeug, umfassend Aufnahmen mit Führungen sowie mit diesen korrespondierende Zapfen, wobei zwei gegenüberliegenden Seiten desWärmetauschers Zapfen (202, 204) und Führungen (212, 214) zugeordnet sind, **dadurch gekennzeichnet, dass** die Führungen (212, 214) nach oben und/oder in Richtung des Kraftfahrzeughecks gerichtet sind, um den Wärmetauscher (102) bei einer nach oben und in Richtung des Kraftfahrzeughecks gerichteten, einen vorgegebenen Wert übersteigenden Krafteinwirkung frei zu geben.

2. Anordnung nach Anspruch 1, **dadurch gekennzeichnet, dass** die Zapfen (202, 204) dem Wärmetauscher (102) und die Aufnahmen (210, 310) dem Fahrzeug zugeordnet sind.

3. Anordnung nach Anspruch 1, **dadurch gekennzeichnet, dass** die Zapfen (202, 204) dem Fahrzeug (102) und die Aufnahmen (210, 310) dem Wärmetauscher zugeordnet sind.

4. Anordnung nach einem der vorhergehenden Ansprüche, **dadurch gekennzeichnet, dass** jeder der zwei gegenüberliegenden Seiten des Wärmetauschers wenigstens zwei zumindest annähernd parallelen Führungen (212, 214) und damit korrespondierende Zapfen (202, 204) zugeordnet sind.

5. Anordnung nach einem der vorhergehenden Ansprüche, **dadurch gekennzeichnet, dass** zur Fixierung des Wärmetauschers (102) zwischen Führung (212, 214) und Zapfen (202, 204) gummielastische Lager vorgesehen sind und die Führung (212, 214) in Freigaberichtung eine Verengung aufweist.

6. Anordnung nach einem der vorhergehenden Ansprüche, **dadurch gekennzeichnet, dass** die gummielastischen Lager durch auf die Zapfen (202, 204) aufgeschobene Gummielemente (206, 208) gebildet sind.

7. Anordnung nach einem der vorhergehenden Ansprüche, **dadurch gekennzeichnet, dass** die gummielastischen Lager durch stopfenartige Gummielemente gebildet sind, welche einen den Zapfen bildenden harten Kern aufweisen und mit demWärmetauscher oder fahrzeugseitig verschraubt, verlötet, verschweißt oder verklebt sind.

8. Anordnung nach einem der vorhergehenden Ansprüche, **dadurch gekennzeichnet, dass** die Aufnahmen (210, 310) mittels Haltelaschen (218, 220)am Wärmetauscher oder fahrzeugseitig befestigt sind.

9. Anordnung nach einem der vorhergehenden Ansprüche, das **gekennzeichnet,** dass die Befestigungseinrichtung (200, 300) geeignet ist, den Wärmetauscher (102) bei einer einen ersten vorgegebenen Wert übersteigenden Krafteinwirkungfrei zu geben, indem die Zapfen (202, 204) mit den Gummielemente (206, 208) unter Überwindung der Haltekraft in Freigaberichtung aus den Aufnahmen (210, 310) ausknüpfen.

10. Anordnung nach einem der vorhergehenden Ansprüche, **dadurch gekennzeichnet, dass** die Befestigungseinrichtung (200, 300) geeignet ist, den Wärmetauscher (102) bei einer einen zweiten vorgegebenen Wert übersteigenden und/oder einer nicht in Freigaberichtung gerichteten Krafteinwirkung frei zu geben, indem die Haltelaschen (218, 220) abbrechen

11. Anordnung nach einem der vorhergehenden Ansprüche, **dadurch gekennzeichnet, dass** in Verbindung mit der Befestigungseinrichtung (200, 300), insbesondere abströmseitig, eine Luftführungseinrichtung (216, 302, 304) vorgesehen ist.

12. Anordnung nach einem der vorhergehenden Ansprüche, **dadurch gekennzeichnet, dass** die Luftführungseinrichtung (216, 302, 304) zumindest bereichsweise elastisch ausgebildet ist.

13. Anordnung nach einem der vorhergehenden Ansprüche, **dadurch gekennzeichnet, dass** die Luftführungseinrichtung (216, 302, 304) geeignet ist, bei einer Verschiebung des Wärmetauschers (102) zumindest bereichsweise reversibel auszuweichen.

## Claims

1. A cooler arrangement comprising a device for fastening a heat exchanger of a cooling apparatus to a motor vehicle, comprising receivers with guides and with corresponding taps, wherein the taps (202, 204) and the guides (212, 214) are associated with opposite sides of the heat exchanger, **characterised in that** the guides (212, 214) are directed above and/or towards the rear of the vehicle, in order to release the heat exchanger (102) after exertion of a force exceeding a set value and directed upwards and towards the rear of the vehicle.

2. An arrangement according to claim 1, **characterised in that** the taps (202, 204) are associated with the heat exchanger (102) and the receivers (210, 310) are associated with the vehicle.

3. An arrangement according to claim 1, **characterised in that** the taps (202, 204) are associated with the vehicle (102) and the receivers (210, 310) are associated with the heat exchanger.

4. An arrangement according to any of the preceding claims, **characterised in that** at least two approximately parallel guides (212, 214) and corresponding taps (202, 204) are associated with each of the two opposite sides of the heat exchanger.

5. An arrangement according to any of the preceding claims, **characterised in that** elastomeric bearings are provided for fixing the heat exchanger (102) between the guide (212, 214) and the tap (202, 204) and the guide (212, 214) has a constriction in the release direction.

6. An arrangement according to any of the preceding claims, **characterised in that** the elastomeric bearings are in the form of rubber elements (206, 208) slid on to the taps (202, 204).

7. An arrangement according to any of the preceding claims, **characterised in that** the elastomeric material bearings are in the form of stopper-like rubber elements which have a hard core constituting the tap and are screwed, soldered, welded or stuck to the heat exchanger or to the vehicle.

8. An arrangement according to any of the preceding claims, **characterised in that** the receivers (210, 310) are fastened to the heat exchanger or vehicle by retaining lugs (218, 220).

9. An arrangement according to any of the preceding claims, **characterised in that** the fastening device (200, 300) is adapted to release the heat exchanger (102) after exertion of a force exceeding a first set value, when the taps (202, 204) and the rubber elements (206, 208) are disengaged from the recesses (210, 310), overcoming the retaining force in the release direction.

10. An arrangement according to any of the preceding claims, **characterised in that** the fastening device (200, 300) is adapted to release the heat exchanger (102) after application of a force exceeding a second set value and/or not in the release direction, when the lugs (218, 220) break off.

11. An arrangement according to any of the preceding claims, **characterised in that** an air guide device (216, 302, 304) is provided in conjunction with the fastening device (200, 300), especially on the outflow side.

12. An arrangement according to any of the preceding claims, **characterised in that** the air guide device (216, 302, 204) is made of elastic material, at least in parts.

13. An arrangement according to any of the preceding claims, **characterised in that** the air guide device (216, 302, 304) is adapted to give way reversibly, at least in parts, when the heat exchanger (102) is moved.

## Revendications

1. Agencement de radiateur comportant une installation pour fixer un échangeur de chaleur d'une installation de radiateur sur un véhicule automobile comprenant des moyens de réception avec des moyens de guidage ainsi que des goujons correspondants,
deux côtés opposés de l'échangeur de chaleur étant munis de goujons (202, 204) et de moyens de guidage (212, 214),
**caractérisé en ce que**
les moyens de guidage (212, 214) sont dirigés vers le haut et/ou en direction de l'arrière du véhicule pour libérer l'échangeur de chaleur (102) sous l'effet d'une force dépassant une valeur prédéfinie et dirigée vers le haut et vers l'arrière du véhicule.

2. Agencement selon la revendication 1,
**caractérisé en ce que**
les goujons (202, 204) sont associés à l'échangeur de chaleur (102) et les moyens de réception (210, 310) sont associés au véhicule.

3. Agencement selon la revendication 1,
**caractérisé en ce que**
les goujons (202, 204) sont associés au véhicule (102) et les moyens de réception (210, 310) sont associés à l'échangeur de chaleur.

4. Agencement selon l'une des revendications précédentes,
**caractérisé en ce que**
chacun des deux côtés opposés de l'échangeur de chaleur comporte au moins deux moyens de guidage (212, 214) sensiblement parallèles et des goujons (202, 204) correspondants.

5. Agencement selon l'une des revendications précédentes,
**caractérisé par**
des paliers élastiques comme du caoutchouc prévus entre les moyens de guidage (212, 214) et les goujons (202, 204) pour fixer l'échangeur de chaleur (102), et les moyens de guidage (212, 214) présentent un rétrécissement dans la direction de libération.

6. Agencement selon l'une des revendications précédentes,
**caractérisé en ce que**
les paliers élastiques comme du caoutchouc sont constitués par des éléments en caoutchouc (206, 208) installés sur les goujons (202, 204).

7. Agencement selon l'une des revendications précédentes,
**caractérisé en ce que**
les paliers élastiques comme du caoutchouc sont constitués par des éléments en caoutchouc en forme de bouchons ayant un noyau dur constituant le goujon et vissés, soudés, brasés ou collés à l'échangeur de chaleur ou au véhicule.

8. Agencement selon l'une des revendications précédentes,
**caractérisé en ce que**
les moyens de réception (210, 310) sont fixés à l'échangeur de chaleur ou au véhicule à l'aide de pattes de fixation (218, 220).

9. Agencement selon l'une des revendications précédentes,
**caractérisé en ce que**
l'installation de fixation (200, 300) est destinée à libérer l'échangeur de chaleur (102) sous l'effet d'une force dépassant une première valeur prédéfinie, et les goujons (202, 204) munis des éléments en caoutchouc (206, 208) se dégagent des moyens de réception (210, 230) en déplaçant la force de retenue dans la direction de libération.

10. Agencement selon l'une des revendications précédentes,
**caractérisé en ce que**
l'installation de fixation (200, 300) permet de libérer l'échangeur de chaleur (102) sous l'action d'une force dépassant une seconde valeur prédéfinie et/ou non dirigée dans la direction de libération, **en ce que** les pattes de fixation (218, 220) se cassent.

11. Agencement selon l'une des revendications précédentes,
**caractérisé par**
une installation de guidage d'air (216, 302, 304) notamment du côté de la sortie, en liaison avec l'installation de fixation (200, 300).

12. Agencement selon l'une des revendications précédentes,
**caractérisé en ce que**
l'installation de guidage d'air (216, 302, 304) est élastique au moins par zones.

13. Agencement selon l'une des revendications précédentes,
**caractérisé en ce que**
l'installation de guidage d'air (216, 302, 304) peut éviter de manière réversible, au moins par zones, lors du coulissement de l'échangeur de chaleur (102).
